# EUROPEAN PATENT SPECIFICATION

(11) **EP 3 907 115 B1**
(45) Date of publication and mention of the grant of the patent: **07.05.2025**
(21) Application number: 20770924.7
(22) Date of filing: 03.03.2020
(51) Int. Cl.: B60W 40/08, B60W 30/10, B60W 50/00, B60W 60/00, B60W 30/09, B60W 30/095

(54) **ARITHMETIC OPERATION SYSTEM FOR VEHICLE**
ARITHMETISCHES BETRIEBSSYSTEM FÜR FAHRZEUG
SYSTÈME D'OPÉRATION ARITHMÉTIQUE POUR VÉHICULE

(30) Priority: 08.03.2019 JP 2019042926; 08.03.2019 JP 2019042927; 08.03.2019 JP 2019042928
(43) Date of publication of application: 10.11.2021
(73) Proprietor: MAZDA MOTOR CORPORATION, Hiroshima 730-8670 (JP)
(72) Inventor: HORIGOME, Daisuke, Aki-gun, Hiroshima 730-8670 (JP); SAKASHITA, Shinsuke, Aki-gun, Hiroshima 730-8670 (JP); ISHIBASHI, Masato, Aki-gun, Hiroshima 730-8670 (JP); HOJIN, Eiichi, Aki-gun, Hiroshima 730-8670 (JP); MITANI, Akihiro, Aki-gun, Hiroshima 730-8670 (JP); TSUCHIYAMA, Kiyoyuki, Aki-gun, Hiroshima 730-8670 (JP)
(74) Representative: Herrmann, Uwe
(86) International application number: PCT/JP2020/008850
(87) International publication number: WO 2020/184277

(56) References cited:
- EP-A1- 3 343 306
- WO-A1-2016/144631
- WO-A1-2018/075325
- WO-A1-2018/102477
- JP-A- 2011 207 314
- JP-A- 2018 169 706
- US-A1- 2018 194 280
- US-A1- 2019 064 793
- CLAUDINE BADUE ET AL: "Self-Driving Cars: A Survey", ARXIV.ORG, CORNELL UNIVERSITY LIBRARY, 201 OLIN LIBRARY CORNELL UNIVERSITY ITHACA, NY 14853, 14 January 2019 (2019-01-14), XP081005271

## Description

### TECHNICAL FIELD

The present invention relates to a vehicle arithmetic system used for autonomous driving of a vehicle, for example.

### BACKGROUND ART

Patent Document 1 discloses a system for controlling a plurality of on-board devices, such as an engine and a steering wheel, mounted in a vehicle. To control the plurality of on-board devices, the control system has a hierarchical configuration including an integrated controller, a domain controller, and a unit controller. Further, the publication by Claudine et al. "Self-Driving cars: A survey", 14. January 2019, XP081005271 and the document US 2019/064793 A1 provide background information. From EP3343306A1an occupant-status prediction system is known.

### CITATION LIST

### PATENT DOCUMENT

Patent Document 1: Japanese Unexamined Patent Publication No. 2017-061278

### SUMMARY OF THE INVENTION

### TECHNICAL PROBLEM

In order to achieve a highly accurate autonomous driving, it is necessary to perform comprehensive determination to control the motion of the vehicle, based on various information including not only the environment around the vehicle but also the state of the driver, the state of the vehicle, and the like. To this end, there is a need for processing, at high speed, an enormous volume of data from cameras, sensors, or a vehicle-external network, and the like to determine a most suitable motion of the vehicle for every moment and operate each actuator, which leads to a need to construct an arithmetic system that accomplishes this procedure.

In view of the foregoing background, it is therefore an object of the present invention to provide a vehicle arithmetic system for achieving a highly accurate autonomous driving.

### SUMMARY OF THE INVENTION

Specifically, the technique disclosed herein is directed to a vehicle arithmetic system mounted in a vehicle and configured to execute calculation for controlling traveling of the vehicle, the system including a single information processing unit, wherein the information processing unit includes: a vehicle external environment estimation unit configured to receive outputs from sensors that obtain information of a vehicle external environment, and estimate the vehicle external environment including a road and an obstacle; a route generation unit configured to generate a traveling route that avoids the obstacle estimated on the road estimated, based on an output from the vehicle external environment estimation unit; and a target motion determination unit configured to determine, based on an output from the route generation unit, a target motion of the vehicle at a time of traveling along the traveling route generated by the route generation unit.

According to this configuration of the vehicle arithmetic system, the single information processing unit includes: the vehicle external environment estimation unit configured to receive the outputs from the sensors that obtain the information of the vehicle external environment, and estimate the vehicle external environment including a road and an obstacle; the route generation unit configured to generate the traveling route of the vehicle which avoids the obstacle estimated on the road estimated, based on the output from the vehicle external environment estimation unit; and the target motion determination unit configured to determine the target motion of the vehicle so that the vehicle travels along the traveling route generated by the route generation unit. That is, the information processing unit configured as a single piece of hardware achieves functions of estimating the vehicle external environment, generating the route, and determining the target motion. This enables high-speed data transmission among the functions, and suitable control of the entire functions. Thus, centralizing processes for the autonomous driving in a single information processing unit enables highly accurate autonomous driving.

The information processing unit may include an energy management unit configured to calculate a driving force, a braking force, and a steering angle to achieve the target motion determined by the target motion determination unit.

According to this configuration, it is possible not only to estimate the vehicle external environment, generate the route, and determine the target motion with the information processing unit configured as a single piece of hardware, but also to manage energy with the information processing unit. Thus, the vehicle arithmetic system allows highly accurate control of the motion of the vehicle according to the environment around the vehicle. In addition, highly accurate autonomous driving, which takes into account the vehicle behavior and energy consumption, is possible by centralizing processes for the autonomous driving in the single information processing unit.

The energy management unit may compare the driving force, the braking force, and the steering angle that have been calculated with a vehicle energy model, and generate control signals for actuators so as to achieve the driving force, the braking force, and the steering angle.

According to this configuration of the vehicle arithmetic system, the energy management unit can generate the control signal for each actuator according to an output from the target motion determination unit.

In addition, the information processing unit includes a driver state estimation unit configured to receive an output from a sensor that measures a state of a driver and estimate the state of the driver including at least one of a physical behavior or a health condition, and the route generation unit generates a route that is suitable for the state of the driver estimated by the driver state estimation unit.

According to the invention, it is possible not only to estimate the vehicle external environment, generate the route, and determine the target motion with the information processing unit configured as a single piece of hardware, but also to estimate the driver's state with the information processing unit. Further, the route generation unit generates a route that is suitable for the state of the driver estimated by the driver state estimation unit. The above therefore makes it possible to control the motion of the vehicle, based on comprehensive determination based not only on the environment around the vehicle, but also on the state of the driver.

The driver state estimation unit estimates the state of the driver by comparing, with a human model, the output from the sensor that measures the state of the driver.

According to the invention, the driver state estimation unit estimates the state of the driver by comparing, with a human model, the output from the sensor, such as a camera and the like arranged in the passenger compartment, which measures the state of the driver. The above therefore makes it possible to control the motion of the vehicle more accurately, based on comprehensive determination based not only on the environment around the vehicle, but also on the state of the driver.

In addition, the vehicle external environment estimation unit may estimate the vehicle external environment by comparing, with a vehicle external environment model, 3-dimensional information on surroundings of the vehicle, the 3-dimensional information being obtained from the outputs of the sensors that obtain information of the vehicle external environment.

According to this configuration, the vehicle external environment estimation unit receives an output from the sensors, such as a camera and a radar, which are mounted on the vehicle and obtain information of the vehicle external environment, and compares the 3-dimensional information on the surroundings of the vehicle with the vehicle external environment model to estimate the vehicle external environment including the road and an obstacle. This enables appropriate control of motion of the vehicle through arithmetic processing using the vehicle external environment model.

In addition, the target motion determination unit estimates a planar motion of the vehicle and changes in a vehicle posture in up/down directions, which occur when the vehicle travels along the traveling route generated by the route generation unit, by referring to a 6DoF model of the vehicle, and determine the planar motion and the changes in the vehicle posture in the up/down directions which have been estimated, as the target motion of the vehicle, the 6DoF model of the vehicle being obtained by modeling acceleration along three axes, namely, in forward/backward, left/right, and up/down directions of the vehicle that is traveling, and an angular velocity along three axes, namely, pitch, roll, and yaw.

The invention enables appropriate control of motion of the vehicle through arithmetic processing using the 6DoF model of the vehicle.

### ADVANTAGES OF THE INVENTION

With the present invention, the information processing unit configured as a single piece of hardware achieves functions of estimating the vehicle external environment, generating the route, and determining the target motion. This enables high-speed data transmission among the functions, and suitable control of the entire functions. Thus, centralizing processes for the autonomous driving in a single information processing unit enables highly accurate autonomous driving.

### BRIEF DESCRIPTION OF THE DRAWINGS

FIG. 1 illustrates a functional configuration of a vehicle arithmetic system according to an embodiment.
FIG. 2 illustrates an exemplary configuration of an information processing unit.
FIG. 3 illustrates specific examples of actuators of a vehicle and controllers thereof.

### DESCRIPTION OF EMBODIMENT

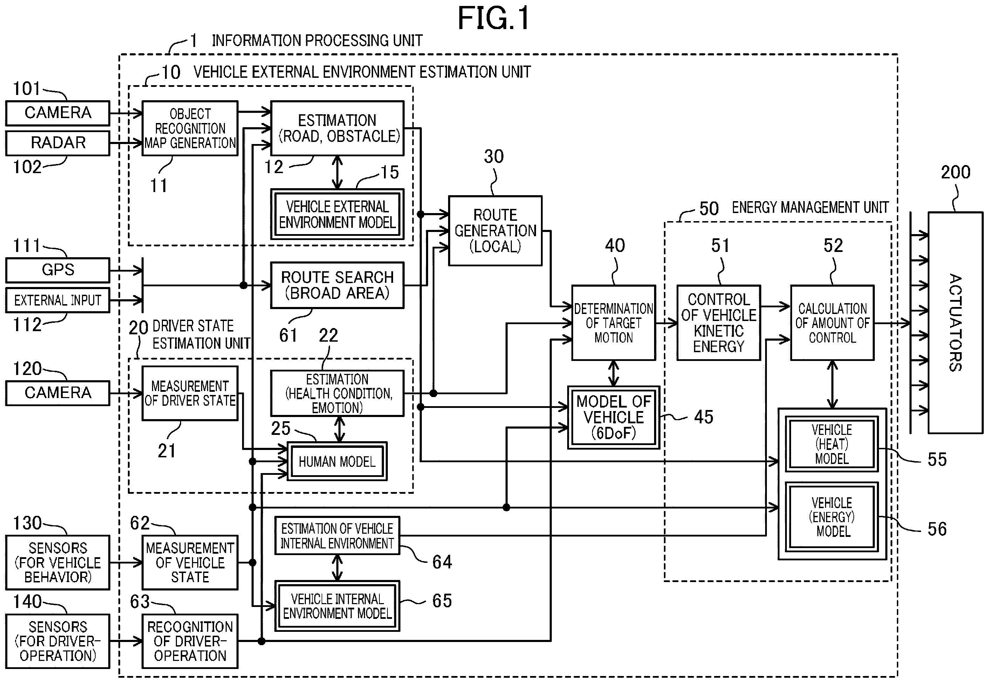

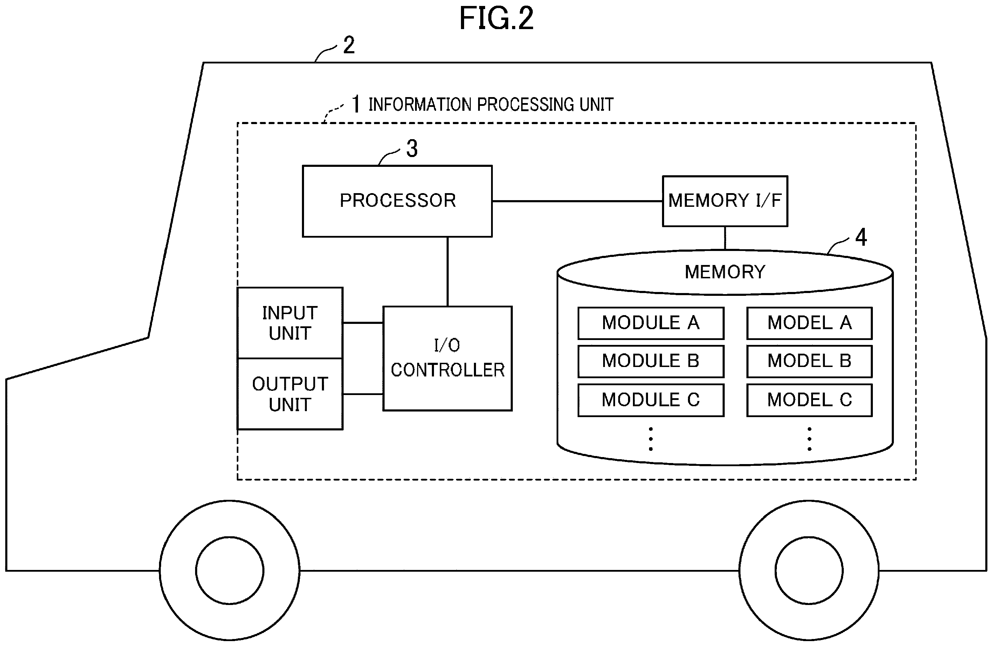

FIG. 1 is a block diagram illustrating a functional configuration of a vehicle arithmetic system according to an embodiment. FIG. 2 illustrates an exemplary configuration of an information processing unit. As shown in FIGS. 1 and 2, a vehicle arithmetic system includes an information processing unit 1 mounted in a vehicle 2. The information processing unit 1 receives various signals and data related to the vehicle 2 as an input. Based on these signals and data, the information processing unit 1 executes arithmetic processing, using a learned model generated by, for example, deep learning, thereby determining a target motion of the vehicle 2. Then, based on the target motion determined, the information processing unit 1 generates control signals for actuators 200 of the vehicle 2.

In the exemplary configuration of FIG. 2, the information processing unit 1 includes a processor 3 and a memory 4. The memory 4 stores modules which are each a software program executable by the processor 3. The function of each unit shown in FIG. 1 is achieved by the processor 3 executing the modules stored in the memory 4. In addition, the memory 4 stores data representing each model shown in FIG. 1. Note that a plurality of processors 3 and memories 4 may be provided.

The functions of the information processing unit 1 may be achieved with a single chip, or a plurality of chips. In a case of using a plurality of chips to achieve the functions, the plurality of chips may be mounted on the same substrate or may be mounted on separate substrates. In the present embodiment, the information processing unit 1 is configured in a single housing.

### <Exemplary Input to Information Processing Unit>

An input to the information processing unit 1 includes outputs from cameras, sensors, and switches mounted in the vehicle, and signals, data and the like from outside the vehicle. For example, the input may be: outputs from a camera 101, a radar 102, and the like mounted on the vehicle which are each an example of sensors for obtaining information of the environment outside the vehicle (hereinafter, referred to as vehicle external environment); signals 111 from a positioning system such as a GPS; data 112 such as navigation data transmitted from a vehicle-external network; an output from a camera 120 and the like installed inside the passenger compartment (an example of a sensor for obtaining information of the driver); outputs from sensors 130 configured to detect the behavior of the vehicle; and outputs from sensors 140 configured to detect driver-operations.

The camera 101 mounted on the vehicle captures images around the vehicle, and outputs image data representing the images captured. The radar 102 mounted on the vehicle sends out radio waves around the vehicle, and receives reflected waves from an object. Based on the waves transmitted and the waves received, the radar 102 measures the distance between the vehicle and the object and the relative speed of the object with respect to the vehicle. Note that other examples of sensors for obtaining information of the vehicle external environment include, for example, a laser radar, an ultrasonic sensor, and the like.

Examples of sensors for obtaining information of the driver, other than the camera 120 installed inside the passenger compartment, include bio-information sensors such as a skin temperature sensor, a heart beat sensor, a blood flow sensor, a perspiration sensor, and the like.

Examples of the sensors 130 for detecting the behavior of the vehicle includes a vehicle speed sensor, an acceleration sensor, a yaw rate sensor, and the like. Examples of the sensors 140 for detecting driver-operation include a steering angle sensor, an accelerator sensor, a brake sensor, and the like.

### <Exemplary Output from Information Processing Unit>

The information processing unit 1 outputs control signals to controllers configured to control actuators 200 of the vehicle. Examples of the controllers include an engine controller, a brake controller, a steering controller, and the like. The controllers are implemented in the form of, for example, an electronic control unit (ECU). The information processing unit 1 and the ECU are connected via an on-board network such as a controller area network (CAN).

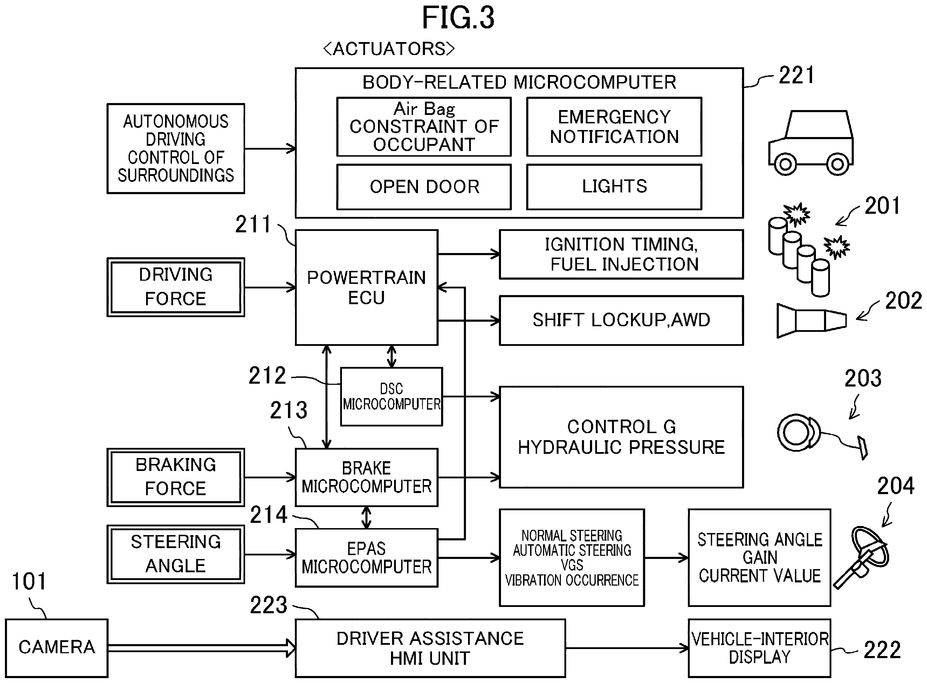

FIG. 3 shows specific examples of the actuators. In FIG. 3, the reference numeral 201 denotes the engine; the reference numeral 202 denotes a transmission; the reference numeral 203 denotes the brake; and the reference numeral 204 denotes the steering wheel. A powertrain ECU 211, a dynamic stability control (DSC) microcomputer 212, a brake microcomputer 213, an electric power assist steering (EPAS) microcomputer 214 are examples of controllers.

The information processing unit 1 calculates a driving force, a braking force, and a steering angle of the vehicle to achieve a target motion determined. For example, the powertrain ECU 211 controls the ignition timing and the amount of fuel injection in the engine 201, according to the driving force calculated. The EPAS microcomputer 214 controls the steering by the steering wheel 204, according to the steering angle calculated.

Note that examples of controllers controlling other actuators include a body-related microcomputer 221 configured to perform controls related to the body, such as an airbag and doors, a driver assistance human machine interface (HMI) unit 223 configured to control vehicle-interior display 222, and the like.

The functional configuration of the information processing unit 1 shown in FIG. 1 will be described in detail. The information processing unit 1 performs so-called model prediction control (MPC) in, for example, a route generating process and the like. To put it simply, the model predictive control involves an evaluation function for yielding a multivariate output with a multivariate input, and solving this function with a convex function (multivariate analysis: a mathematical approach to efficiently solve multivariate problems) to extract a well-balanced outcome. A relational expression (referred to as a model) for obtaining a multivariate output from a multivariate input is first created by a designer based on a physical phenomenon of an object. Then, the relational expression is evolved by neural learning (so-called unsupervised learning). Alternatively, the relational expression is evolved by tuning the relational expression in view of statistics of the inputs and outputs.

At the time of shipment of the vehicle, a model developed by a manufacturer is implemented. Then, the implemented model may evolve to a model suitable for a user, according to how the user drives the vehicle. Alternatively, the model may be updated by an update program distributed by a dealer or the like.

Outputs from the camera 101 and the radar 102 mounted on the vehicle are sent to a vehicle external environment estimation unit 10. Signals 111 of the positioning system such as the GPS and the data 112 (e.g., for navigation) transmitted from the vehicle-external network are transmitted to a route search unit 61. An output of the camera 120 in the passenger compartment is sent to a driver state estimation unit 20. Outputs of the sensors 130 which detect the behavior of the vehicle are sent to a vehicle state measurement unit 62. Outputs of the sensors 140 which detect driver-operations are sent to a driver operation recognition unit 63.

### <Vehicle Exteral Environment Estimation Unit>

The vehicle external environment estimation unit 10 receives the outputs of the cameras 101 and the radars 102 mounted on the vehicle and estimates the vehicle external environment. The vehicle external environment to be estimated includes at least a road and an obstacle. In this example, the vehicle external environment estimation unit 10 estimates the environment of the vehicle including a road and an obstacle by comparing the 3-dimensional information of the surroundings of the vehicle with a vehicle external environment model 15 based on the data obtained by the cameras 101 and the radars 102. The vehicle external environment model 15 is, for example, a learned model generated by deep learning, and allows recognition of a road, an obstacle, or the like with respect to the 3-dimensional information of the surroundings of the vehicle.

For example, an object recognition/map generation unit 11 identifies a free space, that is, an area without an object, by processing images taken by the cameras 101. In this image processing, for example, a learned model generated by deep learning is used. Then, a 2-dimensional map representing the free space is generated. In addition, the object recognition/map generation unit 11 obtains information of a target around the vehicle from outputs of the radars 102. This information includes the position, the speed, and the like of the target.

An estimation unit 12 generates a 3-dimensional map representing the surroundings of the vehicle by combining the 2-dimensional map output from the object recognition/map generation unit 11 and the information on the target. This process uses information of the installation positions and shooting directions of the cameras 101, and information of the installation positions and the transmission direction of the radars 102. The estimation unit 12 then compares the 3-dimensional map generated with the vehicle external environment model 15 to estimate the environment of the vehicle including the road and the obstacle.

### <Driver State Estimation Unit>

The driver state estimation unit 20 estimates a health condition, an emotion, or a physical behavior of the driver from an image captured by the camera 120 installed in the passenger compartment. Examples of the health condition include good health condition, slightly fatigue, poor health condition, decreased consciousness, and the like. Examples of the emotion include fun, normal, bored, annoyed, uncomfortable, and the like.

For example, a driver state measurement unit 21 extracts a face image of the driver from an image captured by the camera 120 installed in the passenger compartment, and identifies the driver. The extracted face image and information of the identified driver are provided as inputs to a human model 25. The human model 25 is a learned model generated by deep learning, for example, and outputs the health condition and the emotion of each person who may be the driver of the vehicle, based on the face image. The estimation unit 22 outputs the health condition and the emotion of the driver output by the human model 25.

In addition, in a case of adopting a bio-information sensor, such as a skin temperature sensor, a heart beat sensor, a blood flow sensor, a perspiration sensor, as a means for acquiring information of the driver, the driver state measurement unit 21 measures the bio-information of the driver from the output from the bio-information sensor. In this case, the human model 25 receives the bio-information as inputs, and outputs the health conditions and the emotions of each person who may be the driver of the vehicle. The estimation unit 22 outputs the health condition and the emotion of the driver output by the human model 25.

In addition, as the human model 25, a model that estimates an emotion of a human in relation to the behavior of the vehicle may be used for each person who may be the driver of the vehicle. In this case, the model may be constructed by managing, in time sequence, the outputs of sensors 130 which detect the behavior of the vehicle, the outputs of the sensors 140 which detect the driver-operations, the bio-information of the driver, and the estimated emotional states. With this model, for example, it is possible to predict the relationship between changes in the driver's emotion (the degree of wakefulness) and the behavior of the vehicle.

In addition, the driver state estimation unit 20 includes a human body model as the human model 25. The human body model specifies, for example, the weight of the head (e.g., 5 kg) and the strength of the muscles around the neck supporting against G-forces in the front, back, left, and right directions. The human body model outputs predicted physical and subjective properties of the occupant, when a motion (acceleration G-force or jerk) of the vehicle body is input. The physical property of the occupant is, for example, comfortable/moderate/uncomfortable, and the subjective property is, for example, unexpected/predictable. For example, a vehicle behavior that causes the head to lean backward even slightly is uncomfortable for an occupant. Therefore, a traveling route that causes the head to lean backward can be avoided by referring to the human body model. On the other hand, a vehicle behavior that causes the head of the occupant to lean forward in a bowing manner does not immediately lead to discomfort. This is because the occupant is easily able to resist such a force. Therefore, such a traveling route that causes the head to lean forward may be selected. Alternatively, by referring to the human body model, a target motion can be determined, for example, so that the head of the occupant does not swing, or determined dynamically so that the occupant feels lively.

### <Route Search Unit>

The route search unit 61 searches for a wide-area route of the vehicle using the signals 111 of the positioning system such as the GPS or the data 112 (e.g. for car navigation) transmitted from the vehicle-external network.

### <Vehicle State Measurement Unit>

The vehicle state measurement unit 62 measures a state of the vehicle, from the outputs of sensors 130 which detect the behavior of the vehicle, such as a vehicle speed sensor, an acceleration sensor, and a yaw rate sensor. Then, a vehicle internal environment model 65 representing the internal environment of the vehicle (hereinafter, vehicle internal environment) is generated. The vehicle internal environment includes physical quantities, such as humidity, temperature, shaking, vibration, and acoustic noise, which particularly physically affect the occupant. A vehicle internal environment estimation unit 64 estimates and outputs the vehicle internal environment based on the vehicle internal environment model 65.

### <Driver Operation Recognition Unit>

The driver operation recognition unit 63 recognizes driver-operations through outputs of the sensors 140, such as the steering angle sensor, the accelerator sensor, and the brake sensor, which detect driver-operations.

### <Route Generation Unit>

A route generation unit 30 generates a traveling route of the vehicle based on the outputs from the vehicle external environment estimation unit 10 and the outputs from the route search unit 61. For example, the route generation unit 30 generates a traveling route that avoids an obstacle estimated by the vehicle external environment estimation unit 10, on the road estimated by the vehicle external environment estimation unit 10. The outputs of the vehicle external environment estimation unit 10 include, for example, travel road information related to the road traveled by the vehicle. The travel road information includes information relating to the shape of the travel road itself and information relating to objects on the travel road. The information relating to the shape of the travel road includes the shape of the travel road (whether it is straight or curved, and the curvature), the width of the travel road, the number of lanes, the width of each lane, and so on. The information related to the object includes a relative position and a relative speed of the object with respect to the vehicle, an attribute (e.g., a type, a moving direction) of the object, and so on. Examples of the type of the object include a vehicle, a pedestrian, a road, a section line, and the like.

Here, it is assumed that the route generation unit 30 calculates a plurality of route candidates by means of a state lattice method, and selects one or more route candidates from among these route candidates based on a route cost of each route candidate. However, the routes may be generated by means of a different method.

The route generation unit 30 sets a virtual grid area on the travel road based on the travel road information. The grid area has a plurality of grid points. With the grid points, a position on the travel road is specified. The route generation unit 30 sets a predetermined grid point as a target reach position, by using the output from the route search unit 61. Then, a plurality of route candidates are calculated by a route search involving a plurality of grid points in the grid area. In the state lattice method, a route branches from a certain grid point to random grid points ahead in the traveling direction of the vehicle. Thus, each route candidate is set to sequentially pass through the plurality of grid points. Each route candidate includes time information indicating the time of passing each grid point, speed information related to the speed, acceleration, and the like at each grid point, and information related to other vehicle motion, and the like.

The route generation unit 30 selects one or more traveling routes from the plurality of route candidates based on the route cost. The route cost described herein includes, for example, the lane-centering degree, the acceleration of the vehicle, the steering angle, the possibility of collision, and the like. Note that, when the route generation unit 30 selects a plurality of traveling routes, a later-described target motion determination unit 40 and a later-described energy management unit 50 select one of the traveling routes.

### <Target Motion Determination Unit>

The target motion determination unit 40 determines a target motion for the traveling route selected by the route generation unit 30. The target motion means steering and acceleration/deceleration for tracing the traveling route. In addition, with reference to the 6DoF model 45 of the vehicle, the target motion determination unit 40 calculates the motion of the vehicle body on the traveling route selected by the route generation unit 30.

Here, the 6DoF model 45 of the vehicle is obtained by modeling acceleration along three axes, namely, in the "forward/backward (surge)," "left/right (sway)," and "up/down (heave)" directions of the traveling vehicle, and the angular velocity along the three axes, namely, "pitch," "roll," and "yaw." That is, the 6DoF model 45 of the vehicle is a numerical model not grasping the vehicle motion only on the plane (the forward/backward and left/right directions (i.e., the movement along the X-Y plane), and the yawing (along the Z-axis)) according to the classical vehicle motion engineering but reproducing the behavior of the vehicle using six axes in total. The vehicle motions along the six axes further include the pitching (along the Y-axis), rolling (along the X-axis) and the movement along the Z-axis (i.e., the up/down motion) of the vehicle body mounted on the four wheels with the suspension interposed therebetween.

In addition, with reference to the 6DoF model 45 of the vehicle, the target motion determination unit 40 calculates the motion of the vehicle body, and uses the calculation result to determine the target motion. That is, the target motion determination unit 40 estimates, by referring to the 6DoF model 45 of the vehicle, a planar motion of the vehicle and changes in a vehicle posture in the up/down directions which occur while the vehicle travels along the traveling route generated by the route generation unit 30, and determines the estimated planar motion of the vehicle and the changes in the vehicle posture in the up/down directions as the target motion of the vehicle. This makes it possible, for example, to generate a state of so-called diagonal roll during cornering.

Further the target motion determination unit 40 inputs, to the human body model, the motion (acceleration G-force or jerk) of the vehicle body calculated by referring to the 6DoF model 45 of the vehicle and obtains predicted physical and subjective properties of the occupant. Then, for example, when the route generation unit 30 selects a plurality of traveling routes, the target motion determination unit 40 may select one of the traveling routes, based on the predicted physical and subjective properties of the occupant.

In addition, when the driver-operation is recognized by the driver operation recognition unit 63, the target motion determination unit 40 determines a target motion according to the driver-operation, and does not follow the traveling route selected by the route generation unit 30.

### <Energy Management Unit>

The energy management unit 50 calculates a driving force, a braking force, and a steering angle to achieve the target motion determined by the target motion determination unit 40. Then, control signals are generated for each actuator 200 so as to achieve the calculated driving force, the braking force, and the steering angle.

For example, a vehicle kinetic energy control unit 51 calculates physical quantities such as a torque required for the drive system (engine, motor, transmission), the steering system (steering wheel), and the braking system (brake) with respect to the target motion determined by the target motion determination unit 40. A control amount calculation unit 52 calculates a control amount for each actuator so that the target motion determined by the target motion determination unit 40 is achievable at the highest energy efficiency. Specifically, for example, the timing of opening and closing intake/exhaust valves, the timing of injecting the fuel from injectors, and the like are calculated so as to yield a most improved fuel efficiency while achieving the engine torque determined by the vehicle kinetic energy control unit 51. The energy management described herein uses a vehicle heat model 55 or a vehicle energy model 56. For example, each of the calculated physical quantities is compared with the vehicle energy model 56 and the kinetic quantity is distributed to each actuator so that the energy consumption is reduced.

Specifically, for example, the energy management unit 50 calculates, based on the target motion determined by the target motion determination unit 40, a motion condition that minimizes the energy loss for the traveling route selected by the route generation unit 30. For example, the energy management unit 50 calculates a traveling resistance of the vehicle for the traveling route selected by the route generation unit 30, and obtains the loss on the route. The traveling resistance includes tire friction, a drive system loss, and air resistance. Then, a driving condition is obtained to generate a driving force required to overcome the loss. Examples of the driving condition obtained includes the injection timing and the ignition timing which minimizes the fuel consumption in the internal combustion engine, a shifting pattern which leads to a small energy loss in the transmission, a lockup control of the torque control. Alternatively, in a case where deceleration is required, a combination of a foot brake and an engine brake of the vehicle model that achieves a deceleration profile and a regenerative model of a drive assisting motor is calculated, and a motion condition that minimizes the energy loss is determined.

Then, the energy management unit 50 generates a control signal for each actuator 200 according to the motion condition determined, and outputs the control signal to the controller of each actuator 200.

As described hereinabove, in a vehicle arithmetic system of the present embodiment, the information processing unit 1 includes a vehicle external environment estimation unit 10 configured to receive outputs from sensors that obtain information of a vehicle external environment, and estimate the vehicle external environment; a route generation unit 30 configured to generate a route of the vehicle, based on the output from the vehicle external environment estimation unit 10; and a target motion determination unit 40 configured to determine a target motion of the vehicle based on an output from the route generation unit 30. That is, the information processing unit 1 configured as a single piece of hardware achieves functions of estimating the vehicle external environment, generating the route, and determining the target motion.

This enables high-speed data transmission among the functions, and suitable control of the entire functions. For example, in a case where the functions are separate ECUs, communication among the ECUs is needed to transmit or receive a large volume of data among the functions. However, the communication speed of the currently used on-board network (CAN, Ethernet (registered trademark)) is approximately 2 Mbps to 100 Mbps. To the contrary, the information processing unit 1 configured as a single piece of hardware allows a data transmission rate of several Gbps to several tens of Gbps.

Thus, centralizing processes for the autonomous driving in a single information processing unit 1 enables highly accurate autonomous driving.

In addition, the information processing unit 1 of the present embodiment further includes an energy management unit 50. That is, it is possible not only to estimate the vehicle external environment, generate the route, and determine the target motion with the information processing unit 1 configured as a single piece of hardware, but also to manage energy with the information processing unit. Therefore, highly accurate autonomous driving, which takes into account the vehicle behavior and energy consumption, is possible by centralizing processes for the autonomous driving in the single information processing unit 1.

### (Examples of Other Controls)

The route generation unit 30 may generate a traveling route of the vehicle by using an output from the driver state estimation unit 20. For example, the driver state estimation unit 20 may output data representing the emotion of the driver to the route generation unit 30, and the route generation unit 30 may select a traveling route by using the data representing the emotion. For example, when the emotion is "fun," a route that causes a smooth behavior of the vehicle is selected, and when the emotion is "bored," a route that causes a largely varying behavior of the vehicle is selected.

Alternatively, the route generation unit 30 may refer to the human model 25 of the driver state estimation unit 20, and select a route that changes the driver's emotion (raises the degree of wakefulness) out of a plurality of route candidates.

In addition, the route generation unit 30, when it is determined that the vehicle is in danger based on the vehicle external environment estimated by the vehicle external environment estimation unit 10, may generate an emergency route for avoiding the danger, irrespective of the state of the driver. In addition, the route generation unit 30 may generate a route for evacuating the vehicle to a safe place, when it is determined that the driver is unable to drive or having a difficulty to drive (e.g., when the driver is unconscious) based on the output from the driver state estimation unit 20.

In addition, the target motion determination unit 40 may determine the target motion so as to evacuate the vehicle to a safe place, when it is determined that the driver is unable to drive or having a difficulty to drive (e.g., when the driver is unconscious) based on the output from the driver state estimation unit 20. The configuration, in this case, may be such that the route generation unit 30 generates a plurality of traveling routes including a route for evacuating the vehicle to a safe place, and that the target motion determination unit 40 selects (override) a route for evacuating the vehicle to a safe place when it is determined that the driver is unable to drive or having a difficulty to drive.

### (Other Embodiments)

In the embodiment described above, the information processing unit 1 configured as a single unit determines a target motion of the vehicle based on various signals and data related to the vehicle, and generates a control signal for each actuator 200 of the vehicle. However, for example, the information processing unit 1 may perform the processes up to the determination of the target motion, and the control signal for each actuator 200 of the vehicle may be generated by another information processing unit. In this case, the single information processing unit 1 does not include the energy management unit 50, and determines the target motion of the vehicle based on the various signals and data related to the vehicle and outputs data representing the target motion. Then, the other information processing unit receives the data output from the information processing unit 1 and generates a control signal for each actuator 200 of the vehicle.

### DESCRIPTION OF REFERENCE CHARACTERS

- 1: Information Processing Unit
- 2: Vehicle
- 10: Vehicle External Environment Estimation Unit
- 15: Vehicle External Environment Model
- 20: Driver State Estimation Unit
- 25: Human Model
- 30: Route Generation Unit
- 40: Target Motion Determination Unit
- 45: 6DoF Model of Vehicle
- 50: Energy Management Unit
- 56: Vehicle Energy Model

## Claims

1. A vehicle arithmetic system mounted in a vehicle (2) and configured to execute calculation for controlling traveling of the vehicle (2), the system comprising
a single information processing unit (1), wherein
the information processing unit (1) includes:
a vehicle external environment estimation unit (10) configured to receive outputs from sensors that obtain information of a vehicle external environment, and estimate the vehicle external environment including a road and an obstacle;
a route generation unit (30) configured to generate a traveling route of the vehicle (2) which avoids the obstacle estimated on the road estimated, based on an output from the vehicle external environment estimation unit (10);
a target motion determination unit (40) configured to determine, based on an output from the route generation unit (30), a target motion of the vehicle (2) so that the vehicle (2) travels along the traveling route generated by the route generation unit (30); and **characterized in that** the information processing unit (1) further includes:
a driver state estimation unit (20) configured to receive an output from a sensor that measures a state of a driver and estimate the state of the driver including at least one of a physical behavior or a health condition, further **characterized in that**
the route generation unit (30) generates a route that is suitable for the state of the driver estimated by the driver state estimation unit (20), and
the driver state estimation unit (20) estimates the state of the driver by refering to a human body model into which a motion of the vehicle body is input and outputting predicted physical and subjective properties of the driver, wherein
the target motion determination unit (40) is configured to estimate a planar motion of the vehicle (2) and changes in a vehicle posture in up/down directions, which occur when the vehicle (2) travels along the traveling route generated by the route generation unit (30), by referring to a 6DoF model (45) of the vehicle (2), and determine the planar motion and the changes in the vehicle posture in the up/down directions which have been estimated, as the target motion of the vehicle (2), the 6DoF model (45) of the vehicle (2) being obtained by modeling acceleration along three axes, namely, in forward/backward, left/right, and up/down directions of the vehicle (2) that is traveling, and an angular velocity along three axes, namely, pitch, roll, and yaw, and,
the target motion determination unit (40) is configured to input, to the human body model, the target motion of the vehicle (2) and obtain predicted physical and subjective properties of the driver.

2. The vehicle arithmetic system of claim 1, wherein
the information processing unit (1) includes an energy management unit (50) configured to calculate a driving force, a braking force, and a steering angle to achieve the target motion determined by the target motion determination unit (40).

3. The vehicle arithmetic system of claim 2, wherein
the energy management unit (50) compares the driving force, the braking force, and the steering angle that have been calculated with a vehicle energy model, and generates control signals for actuators (200) so as to achieve the driving force, the braking force, and the steering angle.

4. The vehicle arithmetic system of claim 1, wherein
the vehicle external environment estimation unit (10) estimates the vehicle external environment by comparing, with a vehicle external environment model (15), 3-dimensional information on surroundings of the vehicle (2), the 3-dimensional information being obtained from the outputs of the sensors that obtain information of the vehicle external environment.

## Patentansprüche

1. Fahrzeug-Arithmetiksystem, das in einem Fahrzeug (2) montiert und so konfiguriert ist, dass es Berechnungen zum Steuern des Fahrens des Fahrzeugs (2) ausführt, wobei das System Folgendes umfasst
eine einzelne Informationsverarbeitungseinheit (1), wobei
die Informationsverarbeitungseinheit (1) Folgendes beinhaltet:
eine Fahrzeugaußenumgebungs-Schätzeinheit (10), die so konfiguriert ist, dass sie Ausgaben von Sensoren empfängt, die Informationen über eine Fahrzeugaußenumgebung erhalten, und die Fahrzeugaußenumgebung, einschließlich einer Straße und eines Hindernisses, schätzt;
eine Routenerzeugungseinheit (30), die so konfiguriert ist, dass sie eine Fahrtroute des Fahrzeugs (2) erzeugt, die das geschätzte Hindernis auf der geschätzten Straße anhand einer Ausgabe von der Fahrzeugaußenumgebungs-Schätzeinheit (10) umgeht;
eine Zielbewegungsbestimmungseinheit (40), die so konfiguriert ist, dass sie anhand einer Ausgabe von der Routenerzeugungseinheit (30) eine Zielbewegung des Fahrzeugs (2) bestimmt, so dass das Fahrzeug (2) entlang der Fahrtroute fährt, die von der Routenerzeugungseinheit (30) erzeugt wird; und **dadurch gekennzeichnet, dass** die Informationsverarbeitungseinheit (1) ferner beinhaltet:
eine Fahrerzustand-Schätzeinheit (20), die so konfiguriert ist, dass sie eine Ausgabe von einem Sensor empfängt, der einen Zustand eines Fahrers misst, und den Zustand des Fahrers, einschließlich mindestens eines physischen Verhaltens oder eines Gesundheitszustands, schätzt, ferner **dadurch gekennzeichnet, dass**
die Routenerzeugungseinheit (30) eine Route erzeugt, die für den Zustand des Fahrers geeignet ist, der von der Fahrerzustand-Schätzeinheit (20) geschätzt wird, und
die Fahrerzustand-Schätzeinheit (20) den Zustand des Fahrers schätzt, indem sie sich auf ein menschliches Körpermodell bezieht, in das eine Bewegung der Fahrzeugkarosserie eingegeben wird und das vorhergesagte physische und subjektive Eigenschaften des Fahrers ausgibt, wobei
die Zielbewegungsbestimmungseinheit (40) so konfiguriert ist, dass sie eine planare Bewegung des Fahrzeugs (2) und Änderungen einer Fahrzeugstellung in Aufwärts-/Abwärtsrichtungen, die auftreten, wenn das Fahrzeug (2) entlang der Fahrtroute fährt, die von der Routenerzeugungseinheit (30) erzeugt wurde, durch Bezugnahme auf ein 6DoF-Modell (45) des Fahrzeugs (2) schätzt, und Bestimmen der planaren Bewegung und der Änderungen der Fahrzeugstellung in den Aufwärts-/Abwärtsrichtungen, die als die Zielbewegung des Fahrzeugs (2) geschätzt worden sind, wobei das 6DoF-Modell (45) des Fahrzeugs (2) durch Modellieren der Beschleunigung entlang dreier Achsen, nämlich in Vorwärts-/Rückwärts-, Links-/Rechts- und Aufwärts-/Abwärtsrichtung des fahrenden Fahrzeugs (2), und einer Winkelgeschwindigkeit entlang dreier Achsen, nämlich Nicken, Rollen und Gieren, erhalten wird, und
die Zielbewegungsbestimmungseinheit (40) so konfiguriert ist, dass sie in das menschliche Körpermodell die Zielbewegung des Fahrzeugs (2) eingibt und vorhergesagte physische und subjektive Eigenschaften des Fahrers erhält.

2. Fahrzeug-Arithmetiksystem nach Anspruch 1, wobei
die Informationsverarbeitungseinheit (1) eine Energieverwaltungseinheit (50) beinhaltet, die so konfiguriert ist, dass sie eine Antriebskraft, eine Bremskraft und einen Lenkwinkel berechnet, um die Zielbewegung von der Zielbewegungsbestimmungseinheit (40) zu erzielen.

3. Fahrzeug-Arithmetiksystem nach Anspruch 2, wobei
die Energieverwaltungseinheit (50) die Antriebskraft, die Bremskraft und den Lenkwinkel vergleicht, die mit einem Energiemodell des Fahrzeugs berechnet wurden, und Steuersignale für Stellglieder (200) erzeugt, um die Antriebskraft, die Bremskraft und den Lenkwinkel zu erzielen.

4. Fahrzeug-Arithmetiksystem nach Anspruch 1, wobei
die Fahrzeugaußenumgebungs-Schätzeinheit (10) die Fahrzeugaußenumgebung schätzt, indem sie mit einem Fahrzeugaußenumgebungsmodell (15) dreidimensionale Informationen über die Umgebung des Fahrzeugs (2) vergleicht, wobei die dreidimensionalen Informationen von den Ausgaben der Sensoren erhalten werden, die Informationen über die Fahrzeugaußenumgebung erhalten.

## Revendications

1. Système arithmétique pour véhicule, monté sur un véhicule (2) et conçu pour effectuer un calcul permettant de commander un déplacement du véhicule (2), le système comprenant :
une unité (1) de traitement d'informations unique,
l'unité (1) de traitement d'informations comportant :
une unité (10) d'estimation de l'environnement extérieur du véhicule, conçue pour recevoir des sorties en provenance de capteurs servant à obtenir des informations sur un environnement extérieur du véhicule, et pour estimer l'environnement extérieur du véhicule, y compris un chemin et un obstacle ;
une unité (30) de génération de route, conçue pour générer une route de déplacement du véhicule (2) permettant d'éviter l'obstacle estimé sur le chemin estimé, sur la base d'une sortie en provenance de l'unité (10) d'estimation de l'environnement extérieur du véhicule ;
une unité (40) de détermination de mouvement cible, conçue pour déterminer, sur la base d'une sortie en provenance de l'unité (30) de génération de route, un mouvement cible du véhicule (2), de sorte que le véhicule (2) se déplace le long de la route de déplacement générée par l'unité (30) de génération de route ; et
**caractérisé en ce que** l'unité (1) de traitement d'informations comporte en outre :
une unité (20) d'estimation de l'état du conducteur, conçue pour recevoir une sortie en provenance d'un capteur servant à mesurer un état d'un conducteur et à estimer l'état du conducteur, y compris un comportement physique et/ou un état de santé,
**caractérisé en outre en ce que**
l'unité (30) de génération de route génère une route qui s'adapte à l'état du conducteur estimé par l'unité (20) d'estimation de l'état du conducteur, et
l'unité (20) d'estimation de l'état du conducteur estime l'état du conducteur au moyen de la consultation d'un modèle de corps humain dans lequel un mouvement de la carrosserie est entré et de la sortie de propriétés physiques et subjectives prédites du conducteur,
dans lequel
l'unité (40) de détermination de mouvement cible est conçue pour estimer un mouvement planaire du véhicule (2) et des variations de la position du véhicule dans des directions haut/bas, lesquels surviennent lorsque le véhicule (2) se déplace le long de la route de déplacement générée par l'unité (30) de génération de route, au moyen de la consultation d'un modèle 6DoF (45) du véhicule (2), et pour déterminer le mouvement planaire et les variations de la position du véhicule dans les directions haut/bas, qui ont été estimés, en tant que mouvement cible du véhicule (2), le modèle 6DoF (45) du véhicule (2) étant obtenu à l'aide d'une modélisation de l'accélération le long de trois axes, à savoir, dans les directions avant/arrière, gauche/droite et haut/bas du véhicule (2) en déplacement, et d'une vitesse angulaire le long de trois axes, à savoir, tangage, roulis et lacet, et
l'unité (40) de détermination de mouvement cible est conçue pour entrer, dans le modèle de corps humain, le mouvement cible du véhicule (2), et pour obtenir des propriétés physiques et subjectives prédites du conducteur.

2. Le système arithmétique pour véhicule de la revendication 1, dans lequel
l'unité (1) de traitement d'informations comporte une unité (50) de gestion d'énergie, conçue pour calculer une force d'entraînement, une force de freinage et un angle de braquage afin d'obtenir le mouvement cible déterminé par l'unité (40) de détermination de mouvement cible.

3. Le système arithmétique pour véhicule de la revendication 2, dans lequel
l'unité (50) de gestion d'énergie compare la force d'entraînement, la force de freinage et l'angle de braquage, qui ont été calculés, avec un modèle d'énergie du véhicule, et génère des signaux de commande destinés à des actionneurs (200) de manière à obtenir la force d'entraînement, la force de freinage et l'angle de braquage.

4. Le système arithmétique pour véhicule de la revendication 1, dans lequel
l'unité (10) d'estimation de l'environnement extérieur du véhicule estime l'environnement extérieur du véhicule à l'aide de la comparaison, avec un modèle (15) d'environnement extérieur du véhicule, d'informations tridimensionnelles sur les alentours du véhicule (2), les informations tridimensionnelles étant obtenues à partir des sorties des capteurs qui obtiennent des informations sur l'environnement extérieur du véhicule.
